Europäisches Patentamt

European Patent Office

Office européen des brevets

(19)

(11)  **EP 1 039 622 A1**

## (12)  DEMANDE DE BREVET EUROPEEN

(43) Date de publication:
**27.09.2000   Bulletin 2000/39**

(51) Int Cl.⁷: **H02M 7/48**

(21) Numéro de dépôt: **99870048.8**

(22) Date de dépôt: **16.03.1999**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI**<br><br>(71) Demandeur: **ALSTOM BELGIUM S.A.**<br>**6001 Charleroi (BE)** | (72) Inventeur: **Bou Saada, Johnny**<br>**B-1190 Bruxelles (BE)**<br><br>(74) Mandataire: **Van Malderen, Joelle et al**<br>**Office Van Malderen,**<br>**Place Reine Fabiola 6/1**<br>**1083 Bruxelles (BE)** |

(54)   **Procédé d'alimentation d'équipements nécessitant une isolation galvanique et générateur destiné à cet effet**

(57)   La présente invention concerne un procédé d'alimentation d'équipements dits auxiliaires présentant une isolation galvanique par génération d'une tension basse fréquence (er) à partir d'une tension continue, caractérisé en ce que :

- l'on génère deux tensions alternatives sinusoïdales (e1 et e2) à partir de la tension continue, et présentant deux fréquences légèrement différentes l'une de l'autre (ω et ω') en vue de créer un battement,
- l'on somme ces deux tensions alternatives sinusoïdales (e1 et e2) en une tension sommée (e) présentant une composante haute fréquence d'une fréquence

$$\left( \frac{(\omega + \omega')}{2} \right)$$

et une composante basse fréquence d'une fréquence

$$\left( \frac{(\omega - \omega')}{2} \right),$$

et
- l'on élimine la composante haute fréquence ou on extrait la composante basse fréquence.

La présente invention concerne également le convertisseur destiné à la mise en oeuvre de ce procédé.

EP 1 039 622 A1

Printed by Jouve, 75001 PARIS (FR)

FIG. 1

## Description

### Objet de l'invention

La présente invention concerne un procédé d'alimentation qui permet de générer une tension alternative basse fréquence destiné à des équipements nécessitant une isolation galvanique.

Par "basse fréquence", on entend une tension de 50 Hz (ou 60 Hz).

Il peut s'agir d'une tension alternative monophasée ou triphasée.

La présente invention se rapporte également à un générateur destiné à la mise en oeuvre du procédé mentionné ci-dessus.

### Arrière-plan technologique

Les convertisseurs statiques utilisés dans le domaine ferroviaire convertissent la tension caténaire (continue ou alternative) en une tension alternative 50 Hz (ou 60 Hz) monophasée ou triphasée. Cette tension peut être utilisée pour alimenter des équipements appelés "équipements auxiliaires" tels que des moteurs de climatisation, de ventilation ou d'éclairage, qui doivent être isolés de la caténaire pour des raisons de sécurité et de facilité d'utilisation. Une isolation galvanique est donc nécessaire et nous oblige, au stade actuel, à utiliser des transformateurs monophasés ou triphasés. Certains schémas utilisent un montage de puissance assez simple, basse fréquence (50 ou 60 Hz) avec un transformateur triphasé à basse fréquence (50 ou 60 Hz). D'autres montages profitent de la propriété des transformateurs à haute fréquence, pour obtenir une grande puissance massique au détriment de la complexité du montage de puissance et du prix du convertisseur.

On va décrire d'une façon schématique les différents montages utilisés actuellement. Quelques variantes sont omises, non pas par oubli, mais plutôt par manque d'intérêt majeur dans les montages de la propulsion électrique.

La conversion classique est réalisée à partir d'une tension continue vers une tension alternative triphasée 380 V 50 Hz (ou 60 Hz) avec une isolation galvanique. L'onduleur à modulation de largeur d'impulsion P.W.M. (Pulse Width Modulation) est suivi par un transformateur triphasé à 50 (ou 60) Hz. Ce dernier est généralement suivi par un filtre passe bas, si une tension sinusoïdale à faible taux de distorsion est exigée. Le transformateur 50-60 Hz est lourd et volumineux proportionnellement à l'onduleur. Sa fabrication exige la présence d'un léger entrefer pour la dissymétrie de la forme d'onde, ce qui ne contribue pas à la facilité de sa conception et augmente d'une manière sensible le courant magnétisant. Le convertisseur ainsi réalisé présente l'avantage de la simplicité de réalisation, de la fiabilité (faible nombre de composants) et d'un moindre coût, bien que le poids et le volume des composants passifs reste élevé. Finalement, étant donné le niveau d'harmoniques élevé pour le faible taux de modulation obtenu, on est obligé d'avoir un filtre de sortie relativement important.

Une autre possibilité consiste à proposer un montage associant un transformateur MF (moyenne fréquence) à un onduleur BF (basse fréquence) assurant l'isolation galvanique. La moyenne fréquence permet de réduire la masse et le volume du transformateur. Le deuxième étage à moyenne fréquence est réalisé par un onduleur DPR (Direct Pulse Width Modulated Rectifier). Si la tension continue est élevée, plusieurs onduleurs DPR sont associés en série pour éviter la mise en série des composants de puissance.

Ce montage est très intéressant pour des systèmes où le poids et/ou l'encombrement sont d'une importance majeure. Le nombre de semi-conducteurs est assez élevé. On peut en déduire que le rendement est plus réduit. Toutefois le filtre de sortie est plus petit (en taille et en poids) que celui du montage avec transformateur BF. Ce genre de montage offre un niveau harmonique rejeté à la source (caténaire dans notre cas) assez intéressant. Cette solution pas très répandue, car sa fiabilité et son prix laissent encore à désirer.

Une dernière solution est l'utilisation de cyclo-convertisseurs qui présentent des problèmes de filtrage de sortie. En outre, cet étage est délicat à réaliser, car les instants de commutation des interrupteurs sont très critiques.

### Buts de l'invention

La présente invention vise à proposer un procédé et un dispositif qui permettent l'alimentation d'équipements dits auxiliaires par génération d'une tension alternative basse fréquence au départ d'une tension continue qui présentent le minimum d'étages de conversion.

La présente invention vise plus précisément à proposer une solution qui permette d'utiliser les avantages des onduleurs haute fréquence tout en gardant la simplicité des montages basse fréquence.

Plus particulièrement, la présente invention vise à proposer un procédé et un dispositif qui permettent l'utilisation de montages ayant un bon rendement, un bruit faible et un filtre de sortie réduit.

En outre, la présente invention vise à proposer un procédé qui permette un fonctionnement bidirectionnel.

En outre, la présente invention vise également à proposer un générateur destiné à la mise en oeuvre du procédé qui soit basé sur un nombre limité de composants, et donc d'un coût relativement réduit tout en ayant une bonne fiabilité.

### Principaux éléments caractéristiques de l'invention

La présente invention est basée sur la propriété du battement. Deux ondes de fréquences ($\omega$ et $\omega'$) légèrement différentes l'une de l'autre créent un battement. Dans presque toutes les applications, en électronique de puissance, le battement est nuisible. L'invention permet au contraire d'en profiter pour générer une tension alternative BF, par exemple à 50 ou 60 Hz.

La présente invention se rapporte à un procédé d'alimentation d'équipements dits auxiliaires présentant une isolation galvanique par génération d'une tension basse fréquence (er) à partir d'une tension continue, caractérisé en ce que :

- l'on génère deux tensions alternatives sinusoïdales (e1 et e2) à partir de la tension continue, et présentant deux fréquences légèrement différentes l'une de l'autre ($\omega$ et $\omega'$) en vue de créer un battement,
- l'on somme ces deux tensions alternatives sinusoïdales (e1 et e2) en une tension sommée (e) présentant une composante haute fréquence d'une fréquence

$$\left( \frac{\left( \omega + \omega' \right)}{2} \right)$$

et une composante basse fréquence d'une fréquence

$$\left( \frac{\left( \omega - \omega' \right)}{2} \right),$$

et
- l'on élimine la composante haute fréquence ou on extrait la composante basse fréquence.

De préférence, on élimine la composante haute fréquence par filtrage ou par redressement.

De préférence, on adopte pour les fréquences des deux tensions sinusoïdales des fréquences supérieures à 1500 Hz.

De manière particulièrement avantageuse, on règle le déphasage de la tension produite en réglant le déphasage des tensions alternatives sinusoïdales. On créera un système de tensions polyphasées en produisant plusieurs tensions alternatives sinusoïdales déphasées.

De manière particulièrement avantageuse, ion filtre les harmoniques présents dans les tensions alternatives sinusoïdales dès leur production. D'une autre manière particulièrement avantageuse, on peut filtrer les harmoniques présents dans la tension de sortie basse fréquence.

On réglera de préférence la tension de sortie en réglant le taux de modulation des onduleurs utilisés pour la génération des deux tensions alternatives sinusoïdales à partir de la tension continue aux fréquences desdites tensions alternatives sinusoïdales.

De manière particulièrement avantageuse, on peut réaliser un redressement bidirectionnel du courant de sortie.

La présente invention se rapporte également au convertisseur destiné à la mise en oeuvre du procédé décrit ci-dessus, qui est constitué de deux convertisseurs tension continue / tension alternative sinusoïdale destinés chacun à créer une tension alternative sinusoïdale à partir d'une tension continue, ces convertisseurs se présentant sous la forme de deux onduleurs haute fréquence monophasés disposés sous la forme d'un demi-pont symétrique de manière à générer un battement entre lesdites tensions alternatives sinusoïdales et qui présentent deux fréquences légèrement différentes l'une de l'autre, ces convertisseurs étant associés à des moyens d'élimination de la composante haute fréquence.

Selon une première forme d'exécution, les deux onduleurs sont associés chacun à un transformateur qui transmet la moitié de la puissance générée.

Selon une autre forme d'exécution, les deux onduleurs sont associés à un seul transformateur.

De préférence, les moyens d'élimination de la composante haute fréquence de la tension sommée sont réalisés à l'aide d'un redresseur lui-même composé de quatre thyristors directs auxquels sont associés quatre thyristors inverses.

Selon une autre forme d'exécution, les moyens d'élimination sont réalisés par un redresseur bidirectionnel constitué de quatre thyristors commandés par des commandes synchronisées sur la tension alternative à la sortie du transformateur.

### Brève description des figures

| | |
|---|---|
| La figure 1 | représente une vue très schématique du principe général de la génération de la tension basse fréquence selon la présente invention, par battement entre deux tensions haute fréquence. |
| La figure 2 | représente une forme d'exécution d'un convertisseur utilisant le principe du battement selon la présente invention. |
| La figure 3 | montre une possibilité de création d'un générateur selon une forme d'exécution préférée de l'invention pour un système triphasé sans neutre. |
| La figure 4 | représente un générateur selon une autre forme d'exécution préférée de l'invention pour un système triphasé avec neutre. |
| La figure 5 | indique le principe de création d'un générateur avec redresseur bidirectionnel. |
| La figure 6 | représente la simulation (par la méthode de Runge Kutter) de la génération d'une tension alternative monophasée. |
| La figure 7 | donne l'analyse des harmoniques d'une tension alternative produite par battement. |
| La figure 8 | représente l'analyse de l'harmonique 3 dans la tension alternative avant le filtre de sortie. |
| La figure 9 | montre les tensions à la sortie des deux onduleurs après filtrage et la tension de sortie. |
| La figure 10 | représente une des nombreuses variantes selon l'invention où un seul transformateur est utilisé. |

### Description de plusieurs formes d'exécution de l'invention

Afin d'appréhender plus facilement le sujet, il est utile de revoir les principes généraux de la génération d'une tension basse fréquence par battement entre deux tensions à fréquence plus élevée.

Prenons deux sources de tensions alternatives sinusoïdales de pulsation respectives ω et ω'. Soit $e_1$ et $e_2$ les deux tensions, pour lesquelles on a :

$$e_1 = A \cdot \sin(\omega.t) \tag{1}$$

$$e_2 = A \cdot \sin(\omega'.t) \tag{2}$$

A étant l'amplitude de chacune des deux tensions.
La somme de ces deux tensions est équivalente à :

$$e = 2 \cdot A \cdot \sin\left(\frac{\omega + \omega'}{2} \cdot t\right) \cdot \cos\left(\frac{\omega - \omega'}{2} \cdot t\right) \tag{3}$$

L'amplitude de cette tension est de 2A et sa fréquence est composée d'une fréquence HF

$$\left(\frac{\omega + \omega'}{2}\right)$$

et d'une fréquence BF

$$\left( \frac{\omega - \omega'}{2} \right).$$

En choisissant de façon adéquate les deux pulsations, on peut générer par exemple du 50 Hz modulé par la haute fréquence. Par exemple, avec $\omega = 2.\pi.1000$ et $\omega' = 2.\pi.1100$, le signal résultant sera de 50 Hz modulé avec du 1050 Hz selon l'équation 3. La modulation à 1050 Hz pourrait être facilement filtrée par un filtre LC (self et condensateur) classique. Le but est d'extraire la fréquence 50 Hz par une démodulation du signal et filtrage de la fréquence 1050 Hz.

Dans l'exemple ci-dessus, le choix de la fréquence de base (1000 Hz) est arbitraire. En réalité, il est particulièrement avantageux de prendre une fréquence bien supérieure, et de préférence supérieure à 15000 Hz, pour optimiser les dimensions du système (pertes, volume, masse, bruit, coût, etc.).

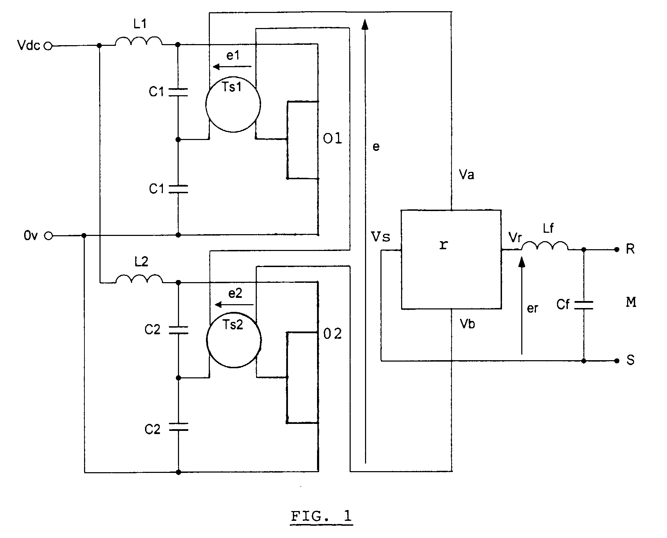

L'installation selon la figure 1 représente de manière schématique un convertisseur tension continue / tension alternative destiné à alimenter les deux phases (R, S) d'un moteur (M). La source de tension continue est représentée dans l'exemple particulier par une source de courant continu 3000 V, par exemple la caténaire (Vdc) de la ligne ferroviaire, alors que le rail est représenté par Ov.

Le générateur selon la présente invention est plus précisément constitué de deux convertisseurs tension continue / tension alternative HF qui sont destinés à créer les deux tensions alternatives haute fréquence (e1 et e2), ayant deux fréquences légèrement différentes l'une de l'autre, chaque convertisseur étant constitué par un onduleur (o1 ou o2) associé à un transformateur (Ts1 ou Ts2).

Les tensions alternatives haute fréquence (e1 et e2) sont sommées (c'est-à-dire additionnées ou soustraites) et donnent une tension (e) qui présente une composante HF d'une fréquence

$$\left( \frac{\omega + \omega'}{2} \right)$$

et une composante BF d'une fréquence

$$\left( \frac{\omega - \omega'}{2} \right)$$

comme exprimées ci-dessus.

Afin d'éliminer la composante haute fréquence de la tension (e), on utilise un redresseur (r).

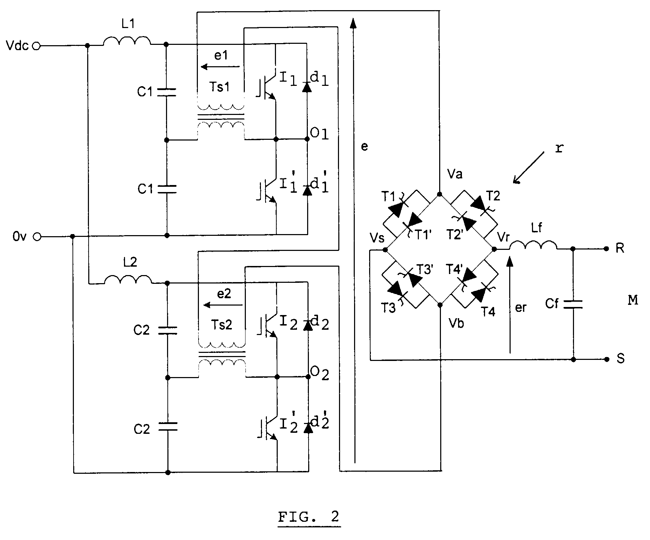

La figure 2 décrit plus en détails cette forme d'exécution dans laquelle on voit deux filtres d'entrée constitués par les selfs (L1, L2) associés chacun à une paire de condensateurs connectés en série (C1, C1') et (C2, C2'). Deux transformateurs (Ts1 et Ts2) associés chacun à un onduleur (o1 et o2) classique de type DPR permettent de produire des tensions alternatives haute fréquence (e1 et e2) aux bornes du transformateur. Chacun de ces onduleurs (o1 et o2) comprend de manière classique deux interrupteurs (I1 et I1') en série associés chacun à une diode de roue libre (d1 et d1'). Bien entendu, les deux transformateurs transmettent chacun la moitié de la puissance en question. De cette manière, on peut additionner (ou soustraire) les deux tensions alternatives haute fréquence (e1 et e2) générées aux bornes des deux transformateurs (Ts1 et Ts2) en une tension (e) entre les bornes (Va et Vb). Cette tension e comprend une composante HF et une composante BF.

En vue d'obtenir une tension redressée entre Vs et Vr, qui présente seulement une composante BF (par exemple de l'ordre de 50 ou 60 Hz), on associe à ce convertisseur un redresseur (r) tel que représenté de manière schématique à la figure 2. Il est composé de quatre thyristors directs (T1 à T4) auxquels sont associés quatre thyristors inverses (T1' à T4').

Pendant la première demi-période, les thyristors directs effectuent le redressement tandis que pendant la seconde demi-période, ce sont les thyristors inverses qui effectuent le redressement.

On obtient ainsi une tension de sortie (er) aux bornes (Vs-Vr) qui peut être ensuite filtrée de manière classique par un filtre de sortie composé d'une self (Lf) et d'un condensateur (Cf).

Le convertisseur selon la présente invention se distingue des schémas de l'état de la technique par l'élimination d'étages qui nécessitaient la conversion en courant continu et par l'élimination des filtres qui y étaient associés. L'ensemble des deux onduleurs (o1 et o2) forme un onduleur à battement (OB).

De multiples autres montages peuvent générer un battement. Le principe commun de l'invention est de créer un battement et d'extraire la basse fréquence utile par un "redressement" adéquat. La haute fréquence permet de minimiser la taille et le poids des transformateurs (Ts1, Ts2) .

La commande de la série de thyristors est synchronisée sur un signal 50 Hz, lui-même obtenu par synchronisation du signal de commande des tensions alternatives (e1 et e2). Il faut s'assurer après la demi-période de 50 Hz que tous les thyristors directs (T1 à T4) sont parfaitement éteints avant d'allumer l'autre série de thyristors inverses (T1' à T4') et vice-versa. Si cette condition n'est pas respectée, un court-circuit de la source sera réalisé.

On ne sort pas de l'invention en ayant recours à d'autres formes de redresseurs. Le "redressement" en BF de la tension (e) peut également être réalisé par d'autres moyens que les séries de thyristors (T1 à T4').

Les deux transformateurs (Ts1 et Ts2) sont indépendants pour éviter une saturation du circuit magnétique à BF (50 Hz par exemple).

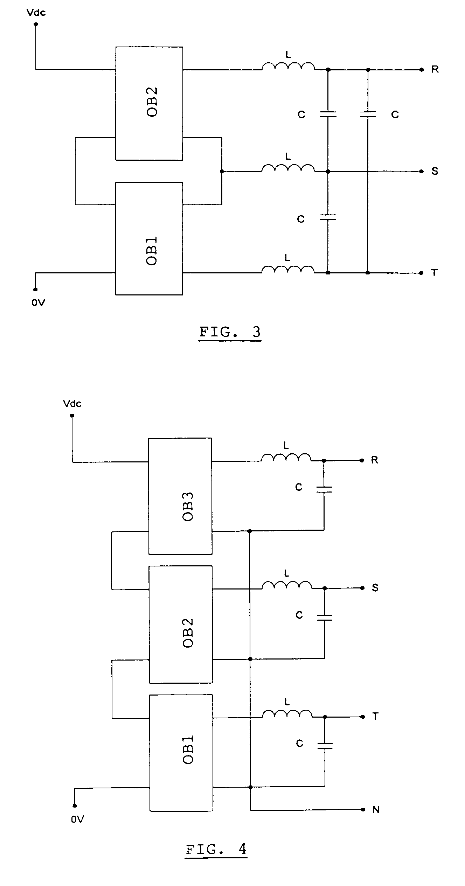

La figure 3 montre un onduleur triphasé à isolation galvanique sous haute tension à utiliser lorsque la sortie triphasée n'exige pas de connexion de neutre. Ce genre d'onduleur est facilement réalisé par deux onduleurs à battement du type de ceux représentés à la figure 1 ou 2. Dans ce cas, chaque onduleur à battement (OB1, OB2) réalise une des tensions entre phases d'un système triphasé.

Lorsque, pour certaines applications, le neutre est indispensable, la figure 4 montre un moyen de réaliser le système par association de 3 onduleurs selon la figure 1 ou 2 (OB1, OB2 et OB3). En effet, ces onduleurs peuvent être connectés sans aucune difficulté en série, en parallèle, etc.

A la figure 2, le redresseur (r) est représenté sous la forme d'un schéma de principe valable dans le cas où seule une partie résistive existe. Dans la réalité, la mise en ouvre de cette solution n'est souvent pas applicable car le courant alternatif présente également une composante réactive.

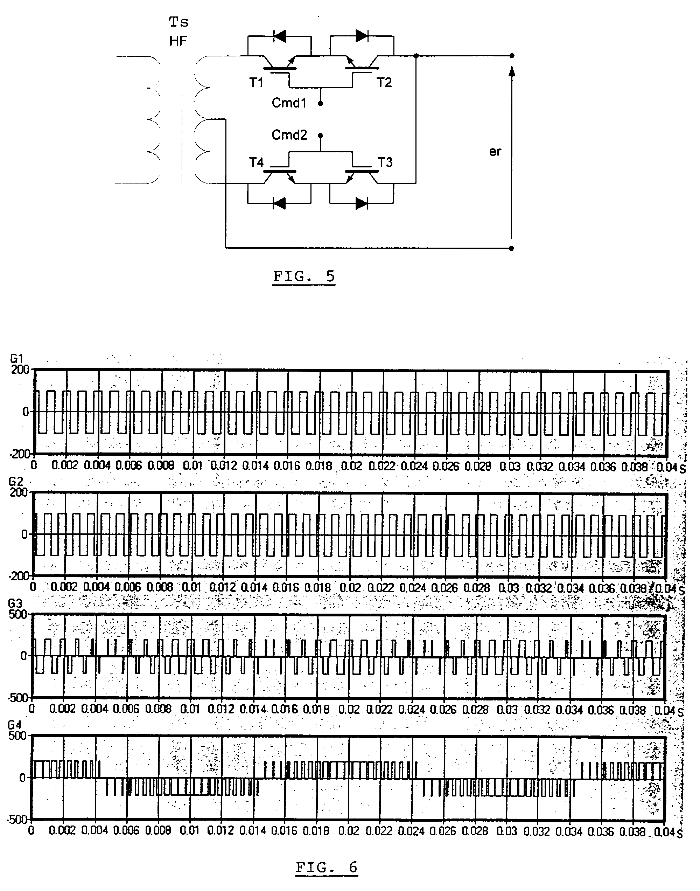

De ce fait, il convient d'utiliser un redresseur bidirectionnel pour le courant selon le schéma de principe utilisé à la figure 5. Dans ce cas, deux paires de transistors de puissance (T1 à T4) connectés en parallèle avec 4 diodes (d) sont installés en série sur les deux bornes de sortie d'un transformateur (Ts) fonctionnant en haute fréquence. Les paires de transistors sont conduites par les systèmes de commande (Cmd1 et Cmd2). La tension de sortie avant filtrage (er) est relevée entre le point milieu du secondaire du transformateur et les extrémités opposées au transformateur des deux paires de transistors.

Ce redressement est plus délicat qu'un simple redressement à diodes. Les commandes (Cmd1 et Cmd2) sont synchronisées sur la sortie HF du transformateur. Pendant l'alternance positive de la basse fréquence désirée (par exemple 50 Hz), la première commande (Cmd1) est enclenchée et la seconde commande (Cmd2) déclenchée lorsque la tension HF est positive (la première commande (Cmd1) étant déclenchée et la seconde commande (Cmd2) étant enclenchée lorsque la tension HF est négative), tandis que lors de l'alternance négative de la basse fréquence et lorsque la tension HF est positive, la première commande (Cmd1) est déclenchée et la seconde commande (Cmd2) est enclenchée (ou la première commande (Cmd1) est enclenchée et la seconde commande (Cmd2) est déclenchée lorsque la tension HF est négative). L'inconvénient de ce système réside dans le fait que le redresseur travaille à haute fréquence, ce qui dégrade les pertes, la fiabilité, etc. Par contre, ce montage permet la réversibilité totale de l'énergie entre la source et la charge. Les montages, en convertisseurs statiques n'ont généralement pas besoin de la réversibilité de puissance. Pourtant, il existe une application intéressante dans les alimentations de secours (UPS soit Uninterruptible Power Supply), où la batterie se charge par le réseau 50 ou 60 Hz s'il est présent à la sortie et délivre une tension sinusoïdale à la charge en cas de disparition du réseau.

A la figure 6, la simulation de la génération de 50 Hz est représentée de 0 à 0,04 seconde. Pour simplifier la simulation à titre didactique, on a utilisé ici une fréquence de 1000 Hz pour la tension (e1), indiquée par (G1), et une fréquence de 1100 Hz pour la tension (e2), indiquée par (G2). La tension (e) est indiquée par (G3) et la tension (er) par (G4). On voit bien que G4 montre une tension alternative à 50 Hz.

Le déphasage de la tension de sortie dépend du déphasage des tensions au temps t = 0 des deux sources e1 et e2. Sur la figure 6, on voit que la tension de sortie démarre à 90° car les deux sources ont été initialisées à t = 0 à 90° aussi. Cela prouve une maîtrise totale du déphasage de la tension de sortie. Cela permet également aisément la génération d'autres sources de tensions à déphasages contrôlés, pour le triphasé, par exemple.

Harmoniques de la tension de sortie

La source de tension, en électronique de puissance, n'est jamais sinusoïdale. Elle est rendue quasi sinusoïdale par ajout de filtre LC à la sortie. Un inconvénient du montage selon les figures 1 et 2 est constitué par les harmoniques générées. Si on se limite par exemple à l'harmonique 3 qui résulte d'une onde en créneau classique, on peut écrire :

$$e_1 = A.\sin(\omega.t) + A_3.\sin(3.\omega.t) \tag{4}$$

$$e_2 = A.\sin(\omega'.t) + A_3.\sin(3.\omega'.t) \tag{5}$$

La tension résultante s'écrit :

$$e = 2 \,.\, A \,.\, \sin\left(\frac{\omega + \omega'}{2} \,.\, t\right) . \cos\left(\frac{\omega - \omega'}{2} \,.\, t\right)$$
$$+ \; 2 \,.\, A_3 \,.\, \sin\left(3 \,.\, \frac{\omega + \omega'}{2} \,.\, t\right) . \cos\left(3 \,.\, \frac{\omega - \omega'}{2} \,.\, t\right) \tag{6}$$

On remarque que dans la tension résultante, l'harmonique 3 tend à persister à la fréquence de sortie. Ceci est assez gênant pour l'application proposée. Le meilleur moyen est de générer dans les deux sources (e1 et e2) des tensions les plus parfaites possible qui sont facilement réalisables à haute fréquence pour que la tension résultante soit la plus propre possible.

Le raisonnement peut s'étendre à toutes les harmoniques d'ordre supérieur à 3 et les combinaisons entre toutes ces harmoniques.

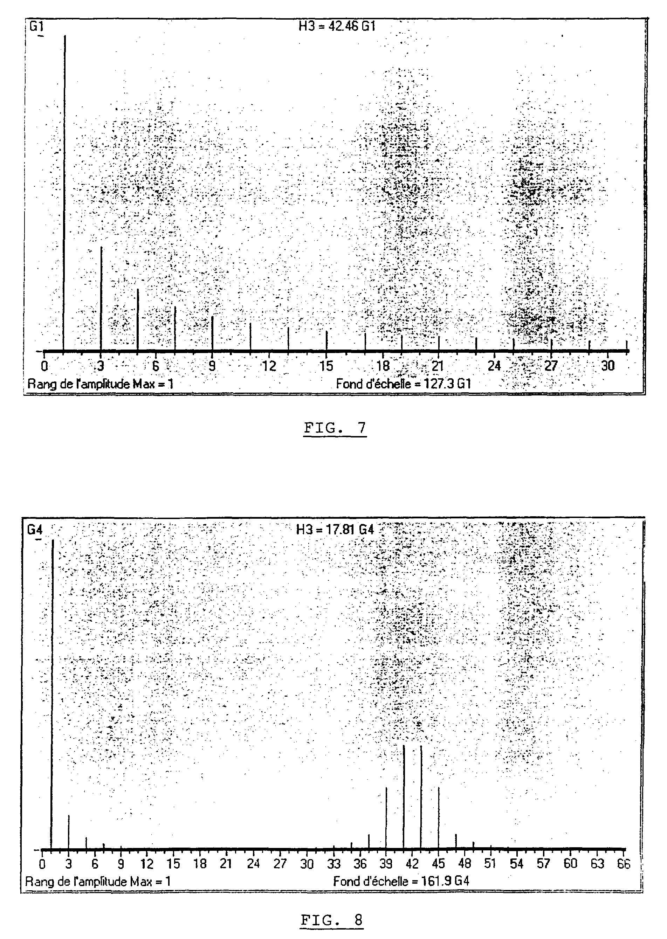

A la figure 7, on voit l'analyse des harmoniques de l'onde en créneaux (G1). L'harmonique la plus importante est l'harmonique 3, que l'on retrouve dans la tension (Vr-Vs) à la figure 8.

Ce problème peut être corrigé facilement en filtrant les sources de tensions (e1 et e2) soit par filtrage (LC), soit par une découpe adéquate (voir figure 7) ; les sources de tensions (e1 et e2) étant à haute fréquence, leur filtrage est aisé ; les harmoniques de la tension de sortie (autres que l'harmonique 3) sont aussi faciles à éliminer, le filtre de sortie peut donc être de dimension réduite contrairement aux circuits classiques.

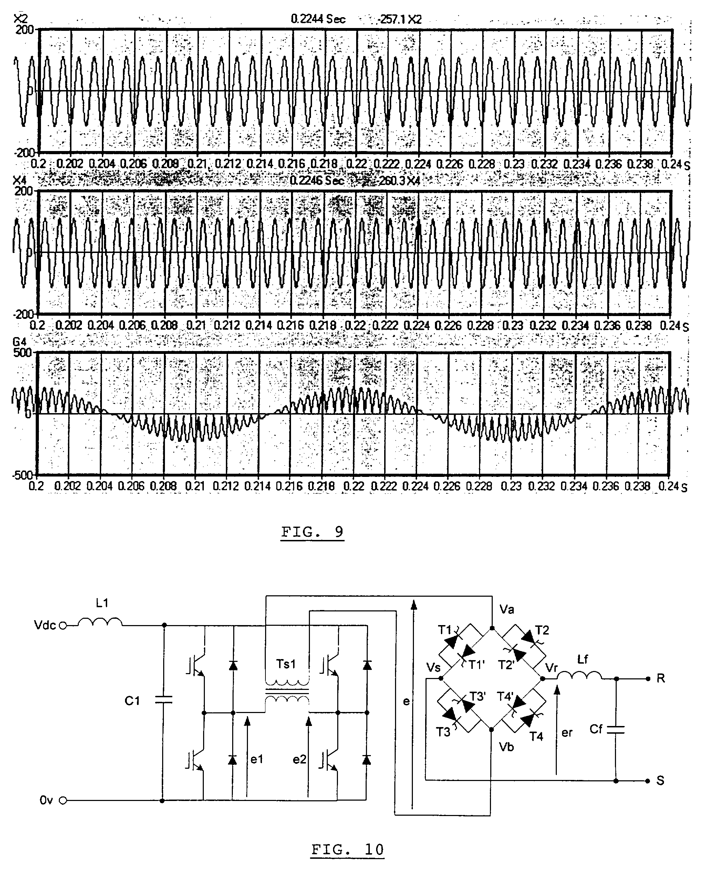

La figure 9 montre, à titre d'exemple la tension de la source e1 (X2) après filtrage ainsi que la tension de sortie G4 (X4). On voit bien que la tension de sortie épouse d'une façon assez fidèle une sinusoïde à 50Hz.

Le réglage de la tension s'effectue au primaire. Il suffit de changer le taux de modulation des deux sources de tensions (e1 et e2). Ces dernières sont fournies par de simples onduleurs PWM. Toutes les lois des modulations PWM peuvent leur être appliquées.

Une mise en série des DPR est possible. En mettant deux onduleurs DPR en série ou même 4 onduleurs DPR si on veut générer une tension triphasée, ce montage peut être connecté directement à une caténaire 3 kV par exemple.

On peut également réaliser un réglage des deux tensions primaires. Etant donné que les tensions e1 et e2 sont des sorties d'onduleurs PWM classiques, il suffit d'appliquer alors toutes les lois de changement du taux de modulation que l'on connaît sur ce genre d'onduleur élémentaire.

En choisissant une modulation à un angle par quart de période par exemple, le changement du taux de modulation implique le changement du moment de l'application de l'angle a1 (voir figure 9). La forme d'onde utilisant l'angle a1 a un taux de modulation supérieur à celui réalisé par la forme d'onde utilisant l'angle a'1.

Cette méthode n'est pas la seule permettant le changement du taux de modulation. Les générateurs d'onde PWM classique (intersection porteuse-modulante) sont applicables.

Selon une autre variante d'exécution de la présente invention, la génération du battement peut se faire à l'aide d'un seul transformateur (voir figure 10). Ce montage est plus simple que le montage précédent représenté à la figure 1, mais est moins favorable au niveau des harmoniques générées.

Le principe de fonctionnement de ce montage est simple : les sources de tensions (e1 et e2) sont générées respectivement par les branches 1 et 2 de l'onduleur complet monophasé en H. Ce dernier alimente en HF le transformateur. Tous les critères de déphasage entre les sources et les éliminations d'harmoniques sont applicables directement dans ce montage. Par contre, ce montage n'offre pas la possibilité d'un filtrage préalable des deux sources avant leur sommation pour créer le battement. Cette variante est intéressante lorsque la taille du convertisseur doit être réduite le plus possible puisque la densité de puissance est très importante.

Les diverses applications de convertisseurs exigent des sorties spécialisées telles que : onde sinusoïdale monophasée, triphasée à point neutre (connexion étoile), triphasé sans point neutre (connexion triangle), des entrées à basse tension continue, des entrées à haute tension continue, des entrées qui proviennent d'un PMCF etc.

Pour répondre à tous ces cas de figure, l'invention offre beaucoup de possibilités. On traitera en illustration les cas des sorties triphasées. On considère l'onduleur à battement (OB) de la figure 1 comme onduleur élémentaire. Les différents montages se réalisent facilement par association de plusieurs onduleurs élémentaires. On prend ainsi comme exemple une entrée à haute tension continue.

**Revendications**

**1.** Procédé d'alimentation d'équipements dits auxiliaires présentant une isolation galvanique par génération d'une tension basse fréquence (er) à partir d'une tension continue, caractérisé en ce que :

- l'on génère deux tensions alternatives sinusoïdales (e1 et e2) à partir de la tension continue, et présentant deux fréquences légèrement différentes l'une de l'autre ($\omega$ et $\omega'$) en vue de créer un battement,
- l'on somme ces deux tensions alternatives sinusoïdales (e1 et e2) en une tension sommée (e) présentant une composante haute fréquence d'une fréquence

$$\left( \frac{(\omega + \omega')}{2} \right)$$

et une composante basse fréquence d'une fréquence

$$\left( \frac{(\omega - \omega')}{2} \right),$$

et
- l'on élimine la composante haute fréquence ou on extrait la composante basse fréquence.

**2.** Procédé selon la revendication 1, caractérisé en ce que l'on élimine la composante haute fréquence par filtrage.

**3.** Procédé selon la revendication 1, caractérisé en ce que l'on élimine la haute fréquence par redressement.

**4.** Procédé selon l'une quelconque des revendications précédentes, caractérisé en ce que l'on adopte pour les fréquences ($\omega$ et $\omega'$) des tensions alternatives sinusoïdales (el et e2) des fréquences supérieures à 15000 Hz.

**5.** Procédé selon l'une quelconque des revendications précédentes, caractérisé en ce que l'on règle le déphasage de la tension produite en réglant le déphasage des tensions alternatives sinusoïdales (e1 et e2).

**6.** Procédé selon la revendication 6, caractérisé en ce que l'on crée un système de tensions polyphasées en produisant plusieurs tensions alternatives sinusoïdales déphasées.

**7.** Procédé selon l'une quelconque des revendications précédentes, caractérisé en ce que l'on filtre les harmoniques présentes dans les tensions alternatives sinusoïdales (e1 et e2) dès leur production.

**8.** Procédé selon l'une quelconque des revendications précédentes, caractérisé en ce que l'on filtre les harmoniques présents dans la tension de sortie basse fréquence (er) .

**9.** Procédé selon l'une quelconque des revendications précédentes, caractérisé en ce que l'on règle la tension de sortie (er) en réglant le taux de modulation des onduleurs aux fréquences ($\omega$ et $\omega'$) des tensions alternatives sinusoïdales (e1 et e2).

**10.** Procédé selon l'une quelconque des revendications précédentes, caractérisé en ce que l'on réalise un redressement bidirectionnel du courant de sortie.

**11.** Procédé selon l'une quelconque des revendications précédentes, caractérisé en ce que l'on connecte plusieurs onduleurs à battement (OB1, OB2, OB3) en série sur l'alimentation à tension continue.

**12.** Convertisseur destiné à la mise en oeuvre du procédé selon l'une quelconque des revendications précédentes, caractérisé en ce qu'il est constitué de deux convertisseurs tension continue / tension alternative sinusoïdale destinés chacun à créer une tension alternative sinusoïdale (e1 ou e2) à partir d'une tension continue, ces convertisseurs se présentant sous la forme de deux onduleurs (o1 et o2) haute fréquence monophasés disposés sous la forme d'un demi-pont symétrique de manière à générer un battement entre lesdites deux tensions alternatives sinusoïdales (e1 et e2) de fréquences légèrement différentes ($\omega$ et $\omega'$), ces convertisseurs étant associés à des moyens d'élimination de la composante haute fréquence de la tension sommée (e).

**13.** Convertisseur selon la revendication 12, caractérisé en ce que chaque onduleur (o1, o2) est associé à un transformateur (Ts1 ou Ts2) qui transmettent chacun la moitié de la puissance générée.

**14.** Convertisseur selon la revendication 13, caractérisé en ce qu'un seul transformateur est associé aux deux onduleurs (o1 et o2).

**15.** Convertisseur selon l'une quelconque des revendications 12 à 14, caractérisé en ce que les moyens d'élimination de la composante haute fréquence de la tension sommée sont réalisés à l'aide d'un redresseur (r) qui est composé de quatre thyristors directs (T1 à T4) auxquels sont associés quatre thyristors inverses (T1' à T4').

**16.** Convertisseur selon l'une quelconque des revendications 12 à 15, caractérisé en ce que le redresseur (1) est un redresseur bidirectionnel constitué de quatre thyristors commandés par des commandes synchronisées sur la tension alternative à la sortie du transformateur.

FIG. 1

FIG. 2

FIG. 3

FIG. 4

FIG. 5

FIG. 6

FIG. 7

FIG. 8

FIG. 9

FIG. 10

**Office européen des brevets**

**RAPPORT DE RECHERCHE EUROPEENNE**

Numéro de la demande

EP 99 87 0048

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 641 232 A (PITEL IRA J) 3 février 1987 (1987-02-03) | 1-5, 7-10, 12-16 | H02M7/48 |
| A | * colonne 10, ligne 43 - colonne 11, ligne 28; figure 14 * | 6,11 | |
| X | WO 91 01589 A (SECR DEFENCE BRIT) 7 février 1991 (1991-02-07) | 1-5,7,8, 10,12-16 | |
| A | * le document en entier * | 6,9,11 | |
| X | US 4 556 937 A (ZIOGAS PHIOVOS D ET AL) 3 décembre 1985 (1985-12-03) | 1-5,7,8, 10,12 | |
| A | * le document en entier * | 6,9,11, 13-16 | |
| X | PATENT ABSTRACTS OF JAPAN vol. 015, no. 110 (E-1046), 15 mars 1991 (1991-03-15) & JP 03 003674 A (NKK CORP), 9 janvier 1991 (1991-01-09) * abrégé * | 1-5 | |
| X | PATENT ABSTRACTS OF JAPAN vol. 009, no. 061 (E-303), 19 mars 1985 (1985-03-19) & JP 59 198880 A (TOUHOKU DENRIYOKU KK), 10 novembre 1984 (1984-11-10) * abrégé * | 1-5 | DOMAINES TECHNIQUES RECHERCHES (Int.Cl.7) H02M |
| X | SU 955 449 A (INST ELEKTRODINAMIKI) 30 août 1982 (1982-08-30) * abrégé * | 1-5 | |

Le présent rapport a été établi pour toutes les revendications

| Lieu de la recherche | Date d'achèvement de la recherche | Examinateur |
|---|---|---|
| LA HAYE | 11 août 1999 | Lampe, S |

CATEGORIE DES DOCUMENTS CITES

X : partioulièrement pertinent à lui seul
Y : partioulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 99 87 0048

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-1999

| Document brevet cité au rapport de recherche | Date de publication | Membre(s) de la famille de brevet(s) | Date de publication |
|---|---|---|---|
| US 4641232 A | 03-02-1987 | US 4661897 A | 28-04-1987 |
| WO 9101589 A | 07-02-1991 | AUCUN | |
| US 4556937 A | 03-12-1985 | CA 1227531 A | 29-09-1987 |
| JP 03003674 A | 09-01-1991 | AUCUN | |
| JP 59198880 A | 10-11-1984 | AUCUN | |
| SU 955449 A | 30-08-1982 | AUCUN | |

EPO FORM P0460

Pour tout renseignement concernant cette annexe : voir Journal Officiel de l'Office européen des brevets, No.12/82